# EUROPÄISCHE PATENTSCHRIFT

(11) **EP 2 404 080 B1**
(45) Veröffentlichungstag und Bekanntmachung des Hinweises auf die Patenterteilung: **14.05.2014**
(21) Anmeldenummer: 10705299.5
(22) Anmeldetag: 18.02.2010
(51) Int. Cl.: F16H 37/04, F16H 3/12, F16H 61/04

(54) **GRUPPENGETRIEBEVORRICHTUNG**
AUXILIARY-RANGE TRANSMISSION DEVICE
DISPOSITIF DE TRANSMISSION À PLUSIEURS GROUPES

(30) Priorität: 07.03.2009 DE 102009012223
(43) Veröffentlichungstag der Anmeldung: 11.01.2012
(73) Patentinhaber: Daimler AG, 70327 Stuttgart (DE)
(72) Erfinder: GUGGOLZ, Manfred, 71229 Leonberg (DE); KRIEGER, Karl-Ludwig, 26835 Brinkum (DE); KOK, Wilhelmus, 71364 Winnenden (DE); ULMER, David, 70794 Filderstadt (DE)
(74) Vertreter: JENSEN & SON
(86) Internationale Anmeldenummer: PCT/EP2010/001006
(87) Internationale Veröffentlichungsnummer: WO 2010/102711

(56) Entgegenhaltungen:
- WO-A1-01/92048
- WO-A1-2005/080111
- WO-A1-2007/031191
- DE-A1-102005 035 328
- DE-A1-102007 018 967

## Beschreibung

Die Erfindung betrifft eine Gruppengetriebevorrichtung nach dem Oberbegriff des Anspruchs 1.

Es sind bereits Gruppengetriebevorrichtungen mit zumindest einer aktiven Stelleinheit und mit einer Steuer- und/oder Regeleinheit, die dazu vorgesehen ist, ein mittels der Stelleinheit bereitgestelltes Stellmoment auf einen Schaltvorgang anzupassen, bekannt.

Die gattungsgemäße WO 2007/03 1191 A1 beschreibt eine Gruppengetriebevorrichtung mit einer Hauptgetriebeeinheit und einer Vorschaltgruppengetriebeeinheit, wobei die Hauptgetriebeeinheit eine Vorgelegewelle aufweist. An der Vorgelegewelle ist eine aktive Stelleinheit in Form eines Elektromotors angeordnet, mittels welchem die Vorgelegewelle und damit auch mit ihr drehfest verbundene Zahnräder abgebremst oder beschleunigt werden können. Damit kann bei Schaltungen in der Gruppengetriebevorrichtung die Drehzahl der Vorgelegewelle synchronisiert werden.

Die DE 10 2007 018 967 A1 beschreibt ebenfalls eine Gruppengetriebevorrichtung mit einer Hauptgetriebeeinheit und einer Vorschaltgruppengetriebeeinheit, wobei die Hauptgetriebeeinheit zwei Vorgelegewellen aufweist. Zur Synchronisation der Vorgelegewellen sind dabei aktive Stelleinheiten in Form von hydraulischen Antriebsaggregaten vorgesehen.

Die WO 01/92 048 A1 beschreibt eine Gruppengetriebevorrichtung mit einer Hauptgetriebeeinheit und einer Vorschaltgruppengetriebeeinheit, wobei die Vorschaltgruppengetriebeeinheit über Synchronisiermittel verfügt. Die Gruppengetriebevorrichtung weist eine aktive Stelleinheit in Form eines elektrischen Starter-Generators auf, welcher eine Getriebeeingangswelle abbremsen und beschleunigen kann. Die aktive Stelleinheit dient zur Synchronisation der Drehzahl der Getriebeeingangswelle bei Schaltungen in der Hauptgetriebeeinheit.

Der Erfindung liegt insbesondere die Aufgabe zugrunde, eine Schaltbarkeit der Gruppengetriebevorrichtung zu vereinfachen. Sie wird gemäß der Ereindung durch die Merkmale der Ansprüche 1 bzw. 12 gelöst. Weitere Ausgestaltungen ergeben sich aus den Unteransprüchen.

Dabei wird eine Gruppengetriebevorrichtung mit einer Vorschaltgruppengetriebeeinheit, mit zumindest einer aktiven Stelleinheit, die dazu vorgesehen ist, ein Stellmoment in die Vorschaltgruppengetriebeeinheit einzuleiten, und mit einer Steuer- und/oder Regeleinheit, die dazu vorgesehen ist, das in die Vorschaltgruppengetriebeeinheit eingeleitete Stellmoment auf zumindest einen mittels der Vorschaltgruppengetriebeeinheit auszuführenden Schaltvorgang anzupassen, vorgeschlagen.

Dadurch kann eine besonders einfache Schaltbarkeit der Vorschaltgruppengetriebeeinheit erreicht werden, wodurch eine konstruktive Ausführung der gesamten Gruppengetriebevorrichtung und insbesondere der Vorschaltgruppengetriebevorrichtung vereinfacht werden kann. Unter einer "Gruppengetriebevorrichtung" soll vorzugsweise ein Getriebe mit zumindest einer Hauptgetriebeeinheit zur Schaltung von Hauptgetriebegängen und der Vorschaltgruppengetriebeeinheit zur Vervielfachung der Hauptgetriebegänge verstanden werden. Unter einem "Schaltvorgang" soll dabei insbesondere ein Hochschaltvorgang und/oder ein Rückschaltvorgang verstanden werden. Unter einem "Hochschaltvorgang" soll insbesondere ein Schaltvorgang verstanden werden, bei dem eine Gesamtübersetzung der Gruppengetriebevorrichtung verringert wird. Vorzugsweise soll unter einem "Hochschaltvorgang" ein Schaltvorgang verstanden werden, in dem eine Übersetzung der Hauptgetriebeeinheit verringert wird. Unter einem "Rückschaltvorgang" soll insbesondere ein Schaltvorgang verstanden werden, bei dem die Gesamtübersetzung der Gruppengetriebevorrichtung erhöht wird. Vorteilhafterweise soll unter einem Rückschaltvorgang ein Schaltvorgang verstanden werden, in dem die Übersetzung der Hauptgetriebeeinheit erhöht wird. Unter einer "aktiven Stelleinheit" soll weiter eine Einheit verstanden werden, die dazu vorgesehen ist, ein von einem Antriebsmoment einer Primärantriebseinheit abweichendes Stellmoment bereitzustellen. Unter vorgesehen" soll insbesondere speziell programmiert, ausgestattet und/oder ausgelegt verstanden werden.

Erfindungsgemäß wird vorgeschlagen, dass die Gruppengetriebevorrichtung zumindest eine Getriebeeingangswelle umfasst, wobei die Stelleinheit zumindest ein Getriebeeingangswellenstellmittel aufweist, das dazu vorgesehen ist, ein auf die Getriebeeingangswelle wirkendes Stellmoment bereitzustellen. Dadurch kann eine Synchronisation der Gruppengetriebeeinheit verbessert werden.

Desweiteren ist die Stelleinheit in dem zumindest einen Schaltvorgang zur Synchronisation der Vorschaltgruppengetriebeeinheit vorgesehen. Dadurch kann ein Synchronisiervorgang innerhalb der Vorschaltgruppe verkürzt werden, wodurch ein höherer Kundenkomfort erreicht werden kann. Unter einer Synchronisation der Vorschaltgruppengetriebeeinheit soll dabei insbesondere eine Synchronisation von Schaltmitteln der Vorschaltgruppengetriebeeinheit verstanden werden.

Außerdem weist die Vorschaltgruppengetriebeeinheit zumindest ein synchronringfrei ausgebildetes Schaltmittel auf, das zumindest teilweise mit der Stelleinheit verbunden ist. Dadurch kann das Schaltmittel vorteilhaft einfach mittels der Stelleinheit synchronisiert werden. Unter einem "Schaltmittel" soll dabei insbesondere eine Mittel zur Herstellung von drehfesten Verbindungen innerhalb der Gruppengetriebevorrichtung verstanden werden, das für die Schaltung von Getriebegängen vorgesehen ist, wie beispielsweise eine Schiebemuffe mit korrespondierenden Schaltklauen. Unter "synchronisieren" soll eine Veränderung und insbesondere ein Angleichen von Drehzahlen zur Herstellung einer drehfesten Verbindung verstanden werden. Vorteilhafterweise ist das zumindest eine Schaltmittel als eine unsynchronisierte Klauenkupplung ausgeführt. Vorzugsweise weist die Vorschaltgruppengetriebeeinheit lediglich unsynchronisierte Schaltmittel auf. Besonders bevorzugt weist auch die Hauptgetriebeeinheit lediglich unsynchronisierte Schaltmittel auf. Unter "unsynchronisiert" soll dabei insbesondere verstanden werden, dass bei einem Schalten des Schaltmittels auf eine schlupfende Verbindung zwischen Koppelelementen des Schaltmittels verzichtet wird.

In einer besonders vorteilhaften Ausführung ist die Stelleinheit zur Aufnahme eines Stellmoments und zur Abgabe eines Stellmoments vorgesehen. Dadurch kann eine flexibel einsetzbare Stelleinheit bereitgestellt werden.

Weiter wird vorgeschlagen, dass die Steuer- und/oder Regeleinheit dazu vorgesehen ist, das in die Vorschaltgruppengetriebeeinheit eingeleitete Stellmoment während dem Schaltvorgang anzupassen und/oder zu verändern. Dadurch kann eine besonders schnelle Synchronisation erreicht werden.

Ferner wird vorgeschlagen, dass die Steuer- und/oder Regeleinheit dazu vorgesehen ist, eine Zahn-auf-Zahn-Stellung der Vorschaltgruppengetriebeeinheit aufzuheben. Dadurch kann ein Schaltkomfort der Gruppengetriebevorrichtung weiter erhöht werden.

In einer besonders vorteilhaften Ausgestaltung weist die Gruppengetriebevorrichtung zumindest eine Vorgelegewelle auf, wobei die Stelleinheit zumindest ein Vorgelegewellenstellmittel aufweist, das dazu vorgesehen ist, ein auf die Vorgelegewelle wirkendes Stellmoment bereitzustellen. Dadurch kann eine vorteilhaft schnelle Synchronisation erreicht werden.

Besonders bevorzugt ist die Steuer- und/oder Regeleinheit in zumindest einem gegensinnigen mittels der Vorschaltgruppengetriebeeinheit auszuführenden Schaltvorgang dazu vorgesehen, ein Stellmoment für die Vorgelegewelle einzustellen. Dadurch können insbesondere gegensinnige Schaltvorgänge vorteilhaft schnell ausgeführt werden. Unter einem gegensinnigen Schaltvorgang" soll dabei insbesondere ein Schaltvorgang verstanden werden, bei dem die Übersetzung der Vorschaltgruppengetriebeeinheit und die Übersetzung der Hauptgetriebeeinheit gegensinnig, d.h. in entgegengesetzte Richtungen, verändert werden.

Zur Synchronisation von Schaltvorgängen kann die Stelleinheit grundsätzlich entweder das zumindest eine Vorgelegewellenstellmittel oder das zumindest eine Getriebeeingangswellenstellmittel aufweisen. Besonders vorteilhaft umfasst die Stelleinheit jedoch das zumindest eine Vorgelegewellenstellmittel und das zumindest eine Getriebeeingangswellenstellmittel.

Vorteilhafterweise ist die die Steuer- und/oder Regeleinheit in zumindest einem gleichsinnigen mittels der Vorschaltgruppengetriebeeinheit auszuführenden Schaltvorgang dazu vorgesehen, ein Stellmoment für die Getriebeeingangswelle einzustellen. Dadurch können insbesondere gleichsinnige Schaltvorgänge vorteilhaft schnell ausgeführt werden. Unter einem "gleichsinnigen Schaltvorgang" soll dabei insbesondere ein Schaltvorgang verstanden werden, bei dem die Übersetzung der Vorschaltgruppengetriebeeinheit und die Übersetzung der Hauptgetriebeeinheit gleichsinnig, d.h. in die gleiche Richtung, verändert werden.

Da die Stelleinheit vorteilhafterweise weiter zur Synchronisation der Hauptgetriebeeinheit vorgesehen werden kann, wird ferner vorgeschlagen, dass die Gruppengetriebevorrichtung eine Hauptgetriebeeinheit umfasst, die zumindest ein synchronringfreies Schaltmittel aufweist. Dadurch kann eine konstruktiv einfache Ausgestaltung der Hauptgetriebeeinheit erreicht werden.

Besonders bevorzugt ist die Steuer- und/oder Regeleinheit dazu vorgesehen, das Stellmoment auf zumindest einen mittels der Hauptgetriebeeinheit auszuführenden Schaltvorgang anzupassen. Dadurch kann eine vorteilhaft schnelle Synchronisation der Hauptgetriebeeinheit erreicht werden, die besonders vorteilhaft auf die Synchronisation der Vorschaltgruppengetriebeeinheit abgestimmt werden kann.

Vorteilhafterweise wird weiter vorgeschlagen, dass die Steuer- und/oder Regeleinheit zur Synchronisation der Hauptgetriebeeinheit und/oder zur Behebung einer Zahn-auf-Zahnstellung der Hauptgetriebeeinheit vorgesehen ist. Dadurch kann ein Schaltkomfort der Gruppengetriebevorrichtung weiter verbessert werden.

In einer vorteilhaften Weiterbildung ist die Stelleinheit in zumindest einem Betriebsmodus als ein Hybridantriebsmodul ausgebildet, das dazu vorgesehen ist, ein Antriebsmoment bereitzustellen. Dadurch kann die Gruppengetriebevorrichtung vorteilhaft zum Antrieb und/oder zur Rekuperation verwendet werden.

Außerdem wird vorgeschlagen, die Gruppengetriebevorrichtung als ein Doppelkupplungsgetriebe auszubilden. Dadurch kann eine einfache Synchronisation einer als Doppelkupplungsgetriebe ausgebildeten Gruppengetriebevorrichtung erreicht werden.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: einen Antriebsstrang mit einer Gruppengetriebevorrichtung, die ein Vorgelegewellenstellmittel und ein Getriebeeingangswellenstelimittel aufweist,
- Fig. 2: ein Verlaufdiagramm von einem als gleichsinnigen Rückschaltvorgang ausgebildeten Schaltvorgang unter Verwendung des Getriebeeingangswellenstellmittels,
- Fig. 3: ein Verlaufdiagramm von einem als gleichsinniger Rückschaltvorgang ausgebildeten Schaltvorgang unter Verwendung des Vorgelegewellenstellmittels,
- Fig. 4: ein Verlaufdiagramm von einem als gegensinniger Rückschaltvorgang ausgebildeten Schaltvorgang unter Verwendung des Vorgelegewellenstellmittels,
- Fig. 5: ein Verlaufdiagramm von einem als gegensinniger Rückschaltvorgang ausgebildeten Schaltvorgang unter Verwendung des Getriebeeingangswellenstellmittels,
- Fig. 6: ein Verlaufdiagramm von einem als gleichsinniger Hochschaltvorgang ausgebildeten Schaltvorgang unter Verwendung des Getriebeeingangswellenstellmittels,
- Fig. 7: ein Verlaufdiagramm von einem als gleichsinniger Hochschaltvorgang ausgebildeten Schaltvorgang unter Verwendung des Vorgelegewellenstellmittels,
- Fig. 8: ein Verlaufdiagramm von einem als gegensinniger Hochschaltvorgang ausgebildeten Schaltvorgang unter Verwendung des Vorgelegewellenstellmittels und
- Fig. 9: ein Verlaufdiagramm von einem als gegensinniger Hochschaltvorgang ausgebildeten Schaltvorgang unter Verwendung des Getriebeeingangswellenstellmittels.

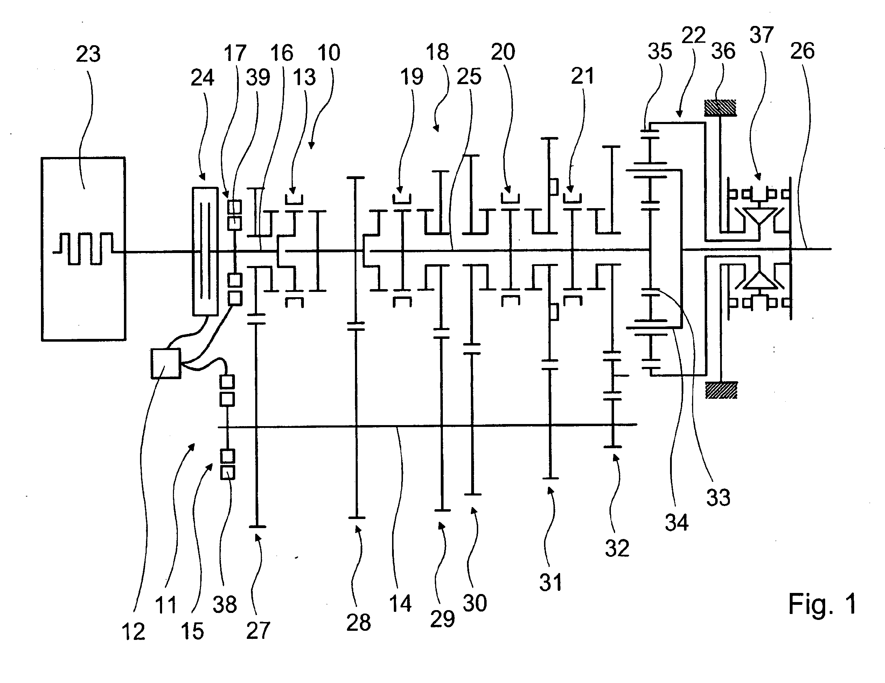

Figur 1 zeigt einen Kraftfahrzeugantriebsstrang mit einer beispielhaften Gruppengetriebevorrichtung, die eine Hauptgetriebeeinheit 18 und eine Vorschaltgruppengetriebeeinheit 10 aufweist. Mittels der Hauptgetriebeeinheit 18 kann eine Anzahl von Hauptgetriebegängen geschaltet werden. Mittels der Vorschaltgruppengetriebeeinheit 10 können die mittels der Hauptgetriebeeinheit 18 schaltbaren Hauptgetriebegänge jeweils in einen schnellen Splitgang und einen langsamen Splitgang geschaltet werden. Außerdem weist die Gruppengetriebevorrichtung eine Nachschaltgruppengetriebeeinheit 22 auf, mittels der die mittels der Hauptgetriebeeinheit 18 und der Vorschaltgruppengetriebeeinheit 10 bildbaren Splitgänge in zwei Schaltgruppen geteilt sind. Der Antriebsstrang weist weiter eine Primärantriebsmaschine 23 auf, die als eine Brennkraftmaschine ausgebildet ist. Die Primärantriebsmaschine 23 ist in einem Kraftfluss vor der Gruppengetriebevorrichtung angeordnet.

Die Gruppengetriebevorrichtung umfasst ferner eine Anfahrkupplung 24 und eine mit der Anfahrkupplung 24 verbundene Getriebeeingangswelle 16. Die Getriebeeingangswelle 16 ist in einem Kraftfluss zwischen der Anfahrkupplung 24 und der Vorschaltgruppengetriebeeinheit 10 angeordnet. Weiter weist die Getriebevorrichtung eine Zwischenwelle 25 auf, die in dem Kraftfluss zwischen der Hauptgetriebeeinheit 18 und der Nachschaltgruppengetriebeeinheit 22 angeordnet ist. Außerdem weist die Gruppengetriebevorrichtung eine Getriebeausgangswelle 26 auf, die im Kraftfluss nach der Nachschaltgruppengetriebeeinheit 22 angeordnet ist.

Die Vorschaltgruppengetriebeeinheit 10 ist in einer Vorgelegebauweise ausgeführt. Die Vorschaltgruppengetriebeeinheit 10 weist eine parallel zu der Getriebeeingangswelle 16 angeordnete Vorgelegewelle 14 auf. Zur Verbindung der Getriebeeingangswelle 16 mit der Vorgelegewelle 14 weist die Vorschaltgruppengetriebeeinheit 10 zwei Zahnradebenen 27, 28 sowie ein Schaltmittel 13 zur Schaltung der Zahnradebenen 27, 28 auf. Mittels zweier Zahnradebenen 27, 28 sind zwei unterschiedliche Übersetzungsverhältnisse zur Ausbildung der Splitgänge der Vorschaltgruppengetriebeeinheit 10 schaltbar. Das Schaltmittel 13 der Vorschaltgruppengetriebeeinheit 10 ist als eine unsynchronisierte Klauenkupplung ausgeführt. Die Vorschaltgruppengetriebeeinheit 10 weist somit lediglich das synchronringfreie Schaltmittel 13 auf.

Die Hauptgetriebeeinheit 18 ist ebenfalls in einer Vorgelegebauweise ausgeführt. Die Vorgelegewelle 14 ist einstückig für die Vorschaltgruppengetriebeeinheit 10 und die Hauptgetriebeeinheit 18 ausgebildet. Zur Verbindung der Vorgelegewelle 14 mit der Zwischenwelle 25 weist die Hauptgetriebeeinheit 18 vier Zahnradebenen 29, 30, 31, 32 sowie drei Schaltmittel 19, 20, 21 zur Schaltung der Zahnradebenen 29, 30, 31, 32 auf. Mittels der drei Zahnradebenen 29, 30, 31 sind drei als Vorwärtsgetriebegänge ausgebildete Hauptgetriebegänge schaltbar. Die Zahnradebene 32 ist zur Bildung von Rückwärtsgetriebegängen vorgesehen. Zur Bildung eines Direktgangs kann mittels der beiden Schaltmittel 13, 19 die Zwischenwelle 25 drehfest mit der Getriebeeingangswelle 16 verbunden werden. Die Schaltmittel 19, 20, 21 der Hauptgetriebeeinheit 18 sind als unsynchronisierte Klauenkupplungen ausgebildet. Die Hauptgetriebeeinheit 18 weist somit lediglich die synchronringfreien Schaltmittel 19, 20, 21 auf.

Die Nachschaltgruppengetriebeeinheit 22 ist in einer Planetenbauweise ausgeführt. Sie weist ein Sonnenrad 33 auf, das drehfest mit der Zwischenwelle 25 verbindbar ist. Weiter weist sie einen drehfest mit der Getriebeausgangswelle 26 verbundenen Planetenradträger 34 und ein Hohlrad 35 auf. Zur Schaltung der Schaltgruppen weist die Nachschaltgruppengetriebeeinheit 22 ein Schaltmittel 37 auf, mittels dem das Hohlrad 35 wahlweise mit einem Getriebegehäuse 36 oder dem Sonnenrad 33 verbunden werden kann. Das Schaltmittel 37 ist als eine synchronisierte Klauenkupplung ausgeführt. Zur Synchronisation weist das Schaltmittel 37 zwei Synchronringe auf, mittels denen bei einem Schaltvorgang eine reibschlüssige Verbindung zwischen zu koppelnden Schaltelementen des Schaltmittels 37 hergestellt wird.

Für Schaltvorgänge, bei denen eine Gesamtübersetzung der Gruppengetriebevorrichtung verändert wird, weist die Gruppengetriebevorrichtung eine aktive Stelleinheit 11 auf, mittels der ein Stellmoment in die Hauptgetriebeeinheit 18 und die Vorschaltgruppengetriebeeinheit 10 eingeleitet werden kann. Weiter weist die Gruppengetriebevorrichtung eine Steuer- und Regeleinheit 12 auf, mittels der das in die Hauptgetriebeeinheit 18 eingeleitete Stellmoment und das in die Vorschaltgruppengetriebeeinheit 10 eingeleitete Stellmoment auf mittels der Vorschaltgruppengetriebevorrichtung auszuführende Schaltvorgänge der Gruppengetriebevorrichtung, insbesondere auf mittels Vorschaltgruppengetriebeeinheit 10 auszuführende Schaltvorgänge, angepasst wird.

Die mittels der Stelleinheit 11 einstellbaren Stellmomente sind zumindest in Teilbereichen stufenlos zwischen einem unteren Grenzwert und einem oberen Grenzwert einstellbar. Der untere Grenzwert ist kleiner als Null, was einer Aufnahme von Stellmomenten entspricht. Der obere Grenzwert ist größer als Null, was einer Abgabe von Stellmomenten entspricht. Die Stelleinheit 11 ist unabhängig von der Primärantriebsmaschine 23.

Das Stellmoment wird in Schaltvorgänge, die mittels der Vorschaltgruppengetriebeeinheit ausgeführt werden, auf den entsprechenden Schaltvorgang angepasst. Bei den mittels der Vorschaltgruppengetriebeeinheit 10 durchgeführten Schaltvorgängen wird eine Schaltstellung des Schaltmittels 13 der Vorschaltgruppengetriebevorrichtung 10 verändert. Eine Schaltstellung der Schaltmittel 19, 20, 21 der Hauptgetriebeeinheit 18 kann bei einem solchen Schaltvorgang ebenfalls verändert werden. Schaltstellungen der Schaltmittel 19, 20, 21 der Hauptgetriebeeinheit 18 können bei einem derartigen Schaltvorgang grundsätzlich auch beibehalten werden.

Mittels des durch die Stelleinheit 11 in die Vorschaltgruppengetriebeeinheit 10 eingeleiteten Stellmoments wird die Vorschaltgruppengetriebeeinheit 10 synchronisiert. Das Schaltmittel 13 der Vorschaltgruppengetriebeeinheit weist ein Eingangskoppelelement und zwei Ausgangskoppelelemente auf. Das Eingangskoppelelement ist mittels einer axial verschiebbaren Schiebemuffe ausgeführt, die wahlweise mit einem der beiden mittels Schaltklauen ausgeführten Ausgangskoppelelemente verbunden werden kann.

Während der Synchronisation der Vorschaltgruppengetriebeeinheit 10 werden eine Drehzahl des Eingangskoppelelements und eine Drehzahl des zu schaltenden Ausgangskoppelelements aneinander angenährt, bis zwischen dem Eingangskoppelelement und dem zu schaltenden Ausgangskoppelelement eine formschlüssige Verbindung hergestellt werden kann. Die Stelleinheit 11 ist dazu wirkungsmäßig mit dem Eingangskoppetelement und den beiden Ausgangskoppelelementen des Schaltmittels 13 verbunden. Während einem Schaltvorgang passt die Steuer- und Regeleinheit 12 das Stellmoment auf eine Drehzahl 45 der Getriebeeingangswelle 16 und eine Drehzahl 44 der Vorgelegewelle 14 an. Die Drehzahl 45 der Getriebeeingangswelle 16 und die Drehzahl 44 der Vorgelegewelle 14 können mittels einer nicht näher dargestellten Sensoreinheit unabhängig voneinander bestimmt werden. Während eines Schaltvorgangs werden die Drehzahlen 44, 45 mittels der Stelleinheit 11 auf eine Solldrehzahl zur Schaltung der Vorschaltgruppengetriebeeinheit 10 bzw. auf eine Solldrehzahl zur Schaltung der Hauptgetriebeeinheit 18 eingeregelt. Außerdem kann die Steuer- und Regeleinheit 11 eine Drehzahl 46 für die Primärantriebsmaschine 23 vorgeben. Die für die Primärantriebsmaschine 23 vorgegebene Drehzahl 46 wird mittels einer nicht näher dargestellten weiteren Steuer- und Regeleinheit, die mit der Steuer- und Regeleinheit 12 verbunden ist, eingestellt.

Zur Einstellung der Drehzahl 44 der Vorgelegewelle 14 weist die Stelleinheit 11 ein Vorgelegewellenstellmittel 15 auf, mittels dem ein Stellmoment für die Vorgelegewelle 14 einstellbar ist. Das Vorgelegewellenstellmittel 15 leitet das Stellmoment direkt in die Vorgelegewelle ein. Die Vorgelegewelle 14 ist mittels der beiden Zahnradebenen 27, 28 wirkungsmäßig mit den Ausgangskoppelelementen verbunden. Mittels des Vorgelegewellenstellmittels 15 sind somit die Drehzahlen der Ausgangskoppelelemente einstellbar.

Zur Einstellung der Drehzahl 45 der Getriebeeingangswelle 16 weist die Stelleinheit 11 ein Getriebeeingangswellenstellmittel 17 auf, mittels dem ein Stellmoment für die Getriebeeingangswelle 16 einstellbar ist. Das Getriebeeingangswellenstellmittel 17 leitet das Stellmoment in die Getriebeeingangswelle 16 ein. Die Getriebeeingangswelle 16 ist mit dem Eingangskoppelelement verbunden. Mittels des Getriebeeingangswellenstellmittels 17 ist somit die Drehzahl des Ausgangskoppelelements einstellbar.

Das Vorgelegewellenstellmittel 15 und das Getriebeeingangswellenstellmittel 17 weisen jeweils einen Elektromotor 38, 39 auf, mittels dem Stellmomente aufgenommen und abgegeben werden können. Zur Aufnahme von Stellmomenten werden die Elektromotoren 38, 39 in Abhängigkeit von einem mittels der Steuer- und Regeleinheit 12 vorgegebenen Betriebsmodus entweder als Generator betrieben oder mit einer Gegenstromrichtung bestromt. Der Elektromotor 38 des Vorgelegewellenstellmittels 15 ist koaxial zu der Vorgelegewelle 14 angeordnet. Der Elektromotor 39 des Getriebeeingangsmittels 17 ist koaxial zu der Getriebeeingangswelle 16 angeordnet. Grundsätzlich ist aber auch eine versetzte Anordnung, beispielsweise mittels Zahnrädern, denkbar.

Mittels der Steuer- und Regeleinheit 12 werden zumindest sämtliche Schaltvorgänge des Schaltmittels 13 der Vorschaltgruppengetriebeeinheit 10 synchronisiert. Weiter werden mittels der Steuer- und Regeleinheit 12 Zahn-auf-Zahn-Stellungen des Schaltmittels 13 der Vorschaltgruppengetriebeeinheit 10 behoben. Ferner können mittels der Steuer- und Regeleinheit 12 Schaltvorgänge der Schaltmittel 19, 20, 21 der Hauptgetriebeeinheit 18 synchronisiert werden. Außerdem können mittels der Steuer- und Regeleinheit 12 Zahn-auf-Zahn-Stellungen der Schaltmittel 19, 20, 21 der Hauptgetriebeeinheit 18 behoben werden. Zur Synchronisation und zur Behebung der Zahn-auf-Zahn-Stellungen sind das Vorgelegewellenstellmittel 15 und das Getriebeeingangswellenstellmittel 17 mittels der Steuer- und Regeleinheit 12 unabhängig voneinander einstellbar. In Abhängigkeit von einem auszuführenden Schaltvorgang bzw. der zu behebenden Zahn-auf-Zahn-Stellung wird die Vorgelegewelle 14 oder die Getriebeeingangswelle 16 mit einem Stellmoment beaufschlagt.

In einem gegensinnigen Schaltvorgang, bei dem eine Übersetzung der Vorschaltgruppengetriebeeinheit 10 und eine Übersetzung der Hauptgetriebeeinheit 18 gegensinnig verändert werden, wird die Vorgelegewelle 14 mit dem Stellmoment beaufschlagt. In einem Schaltvorgang, in dem lediglich die Vorschaltgruppengetriebeeinheit 10 geschaltet wird, wird die Getriebeeingangswelle 16 mit dem Stellmoment beaufschlagt. In einem gleichsinnigen Schaltvorgang, bei dem die Übersetzung der Vorschaltgruppengetriebeeinheit 10 und die Übersetzung der Hauptgetriebeeinheit 18 gleichsinnig verändert werden, wird die Getriebeeingangswelle 16 mit dem Stellmoment beaufschlagt. Alternativ sind auch andere Betriebsmodi denkbar.

Ein Schaltvorgang, der als ein gleichsinniger Rückschaltvorgang ausgebildet ist, wird vorteilhaft mittels des Getriebeeingangswellenstellmittels 17 durchgeführt. In dem Rückschaltvorgang wird die Hauptgetriebeeinheit 18 von einem hohen Hauptgetriebegang in einen niedrigeren Hauptgetriebegang geschaltet. Außerdem wird die Vorschaltgruppengetriebeeinheit 10 von einem schnellen Splitgang in einen langsamen Splitgang geschaltet. Zur Einleitung des Schaltvorgangs schaltet die Steuerund Regeleinheit 12 zunächst die Hauptgetriebeeinheit 10 in die Neutralstellung. Außerdem öffnet die Steuer- und Regeleinheit 12 die Anfahrkupplung 24.

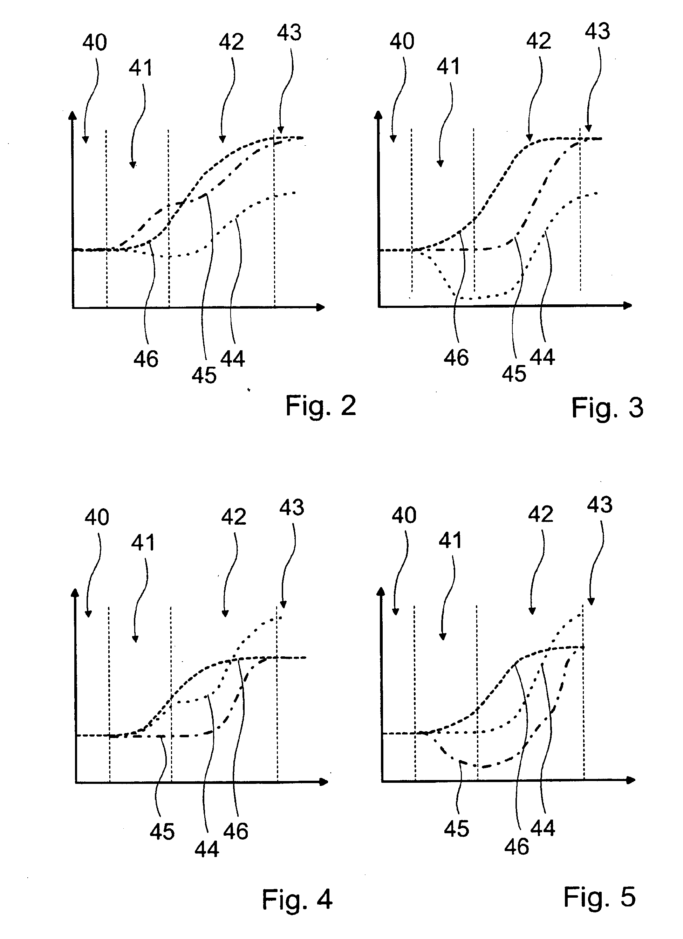

In einer ersten Phase 40 des Schaltvorgangs schaltet die Steuer- und Regeleinheit 12 die Vorschaltgruppengetriebeeinheit 10 von dem schnellen Splitgang in die Neutralstellung. In einer zweiten Phase 41 erhöht die Steuer- und Regeleinheit 12 mittels des Getriebeeingangswellenstellmittels 17 die Drehzahl 45 der Getriebeeingangswelle 16 auf die Solldrehzahl zur Schaltung der Vorschaltgruppengetriebeeinheit 10. Sobald die Getriebeeingangswelle 16 die Solldrehzahl zur Schaltung der Vorschaltgruppengetriebeeinheit 10 erreicht hat, schaltet die Steuer- und Regeleinheit 12 die Vorschaltgruppengetriebeeinheit 10 in den langsamen Splitgang. Zeitgleich mit der Erhöhung der Drehzahl 45 der Getriebeeingangswelle 16 gibt die Steuer- und Regeleinheit 12 eine Erhöhung der Drehzahl 46 der Primärantriebsmaschine 23 vor. In einer dritten Phase 42 schließt die Steuer- und Regeleinheit 12 die Anfahrkupplung 24. Die Drehzahl 46 der Primärantriebsmaschine 23 wird dabei weiter erhöht, bis sie die von der Steuer- und Regeleinheit 12 vorgegebene Solldrehzahl zur Schaltung der Hauptgetriebeeinheit 18 erreicht. Durch das Schließen der Anfahrkupplung 24 erhöht sich dabei die Drehzahl 45 der Getriebeeingangswelle 16, bis sie gleich ist wie die Drehzahl 46 der Primärantriebsmaschine 23. Sobald die Drehzahl 46 der Primärantriebsmaschine 23 die Solldrehzahl zur Schaltung der Hauptgetriebeeinheit 18 erreicht, wird in einer vierten Phase 43 die Hauptgetriebeeinheit 18 in den niedrigeren Hauptgetriebegang geschaltet, wodurch der Schaltvorgang abgeschlossen ist (vgl. Figur 2).

Der Schaltvorgang, der als ein gleichsinniger Rückschaltvorgang ausgebildet ist, kann alternativ auch mittels des Vorgelegewellenstellmittels 15 durchgeführt werden. Zur Einleitung des Schaltvorgangs schaltet die Steuer- und Regeleinheit 12 zunächst die Hauptgetriebeeinheit 18 in die Neutralstellung. Außerdem öffnet die Steuer- und Regeleinheit 12 die Anfahrkupplung 24.

In der ersten Phase 40 des Schaltvorgangs schaltet die Steuer- und Regeleinheit 12 die Vorschaltgruppengetriebeeinheit 10 von dem schnellen Splitgang in die Neutralstellung. In der zweiten Phase 41 verringert die Steuer- und Regeleinheit 12 mittels des Vorgelegewellenstellmittels 15 die Drehzahl 44 der Vorgelegewelle 14 auf die Solldrehzahl zur Schaltung der Vorschaltgruppengetriebeeinheit 10. Sobald die Vorgelegewelle 14 die Solldrehzahl zur Schaltung der Vorschaltgruppengetriebeeinheit 10 erreicht hat, schaltet die Steuer- und Regeleinheit 12 die Vorschaltgruppengetriebeeinheit in den langsamen Splitgang. Zeitgleich mit der Verringerung der Drehzahl 44 der Vorgelegewelle 14 gibt die Steuer- und Regeleinheit 12 eine Erhöhung der Drehzahl 46 der Primärantriebsmaschine 23 vor. In der dritten Phase 42 schließt die Steuer- und Regeleinheit 12 die Anfahrkupplung 24. Die Drehzahl 46 der Primärantriebsmaschine wird dabei weiter erhöht, bis sie die von der Steuer- und Regeleinheit 12 vorgegebene Solldrehzahl zur Schaltung der Hauptgetriebeeinheit 18 erreicht. Durch das Schließen der Anfahrkupplung 24 erhöht sich dabei die Drehzahl 45 der Getriebeeingangswelle 16, bis sie gleich ist wie die Drehzahl 46 der Primärantriebsmaschine 23. Sobald die Drehzahl 46 der Primärantriebsmaschine 23 die Solldrehzahl zur Schaltung der Hauptgetriebeeinheit 18 erreicht, wird in der vierten Phase 43 die Hauptgetriebeeinheit 18 in den niedrigeren Hauptgetriebegang geschaltet, wodurch der Schaltvorgang abgeschlossen ist (vgl. Figur 3).

Ein Schaltvorgang, der als ein gegensinniger Rückschaltvorgang ausgebildet ist, wird vorteilhaft mittels des Vorgelegewellenstellmittels 15 durchgeführt. In dem Rückschaltvorgang wird die Hauptgetriebeeinheit 18 von einem hohen Hauptgetriebegang in einen niedrigeren Hauptgetriebegang geschaltet. Außerdem wird die Vorschaltgruppengetriebeeinheit 10 von einem langsamen Splitgang in einen schnellen Splitgang geschaltet. Zur Einleitung des Schaltvorgangs schaltet die Steuer- und Regeleinheit 12 zunächst die Hauptgetriebeeinheit 18 in die Neutralstellung. Außerdem öffnet die Steuer- und Regeleinheit 12 die Anfahrkupplung 24.

In der ersten Phase 40 des Schaltvorgangs schaltet die Steuer- und Regeleinheit 12 die Vorschaltgruppengetriebeeinheit 10 von dem langsamen Splitgang in die Neutralstellung. In der zweiten Phase 41 erhöht die Steuer- und Regeleinheit 12 mittels des Vorgelegewellenstellmittels 15 die Drehzahl 44 der Vorgelegewelle 14 auf die Solldrehzahl zur Schaltung der Vorschaltgruppengetriebeeinheit 10. Sobald die Vorgelegewelle 14 die Solldrehzahl zur Schaltung der Vorschaltgruppengetriebeeinheit 10 erreicht hat, schaltet die Steuer- und Regeleinheit 12 die Vorschaltgruppengetriebeeinheit 10 in den schnellen Splitgang. Zeitgleich mit der Erhöhung der Drehzahl 44 der Vorgelegewelle 14 gibt die Steuer- und Regeleinheit 12 eine Erhöhung der Drehzahl 46 der Primärantriebsmaschine 23 vor. In der dritten Phase 42 schließt die Steuer- und Regeleinheit 12 die Anfahrkupplung 24. Die Drehzahl 46 der Primärantriebsmaschine 23 wird dabei weiter erhöht, bis sie die von der Steuer- und Regeleinheit 12 vorgegebene Solldrehzahl zur Schaltung der Hauptgetriebeeinheit 18 erreicht. Durch das Schließen der Anfahrkupplung 24 erhöht sich dabei die Drehzahl 45 der Getriebeeingangswelle 16, bis sie gleich ist wie die Drehzahl 46 der Primärantriebsmaschine 23. Sobald die Drehzahl 46 der Primärantriebsmaschine 23 die Solldrehzahl zur Schaltung der Hauptgetriebeeinheit 18 erreicht, wird in der vierten Phase 43 die Hauptgetriebeeinheit 18 in den niedrigeren Hauptgetriebegang geschaltet, wodurch der Schaltvorgang abgeschlossen ist (vgl. Figur 4).

Der Schaltvorgang, der als ein gegensinniger Rückschaltvorgang ausgebildet ist, kann alternativ auch mittels des Getriebeeingangswellenstellmittels 17 durchgeführt werden. Zur Einleitung des Schaltvorgangs schaltet die Steuer- und Regeleinheit 12 zunächst die Hauptgetriebeeinheit 18 in die Neutralstellung. Außerdem öffnet die Steuer- und Regeleinheit 12 die Anfahrkupplung 24.

In der ersten Phase 40 des Schaltvorgangs schaltet die Steuer- und Regeleinheit 12 die Vorschaltgruppengetriebeeinheit 10 von dem langsamen Splitgang in die Neutralstellung. In der zweiten Phase 41 verringert die Steuer- und Regeleinheit 12 mittels des Getriebeeingangswellenstellmittels 17 die Drehzahl 45 der Getriebeeingangswelle 16 auf die Solldrehzahl zur Schaltung der Vorschaltgruppengetriebeeinheit 10. Sobald die Getriebeeingangswelle 16 die Solldrehzahl zur Schaltung der Vorschaltgruppengetriebeeinheit 10 erreicht hat, schaltet die Steuer- und Regeleinheit 12 die Vorschaltgruppengetriebeeinheit 10 in den langsamen Splitgang. Zeitgleich mit der Verringerung der Drehzahl 45 der Getriebeeingangswelle 16 gibt die Steuer- und Regeleinheit 12 eine Erhöhung der Drehzahl 46 der Primärantriebsmaschine 23 vor. In der dritten Phase 42 schließt die Steuer- und Regeleinheit 12 die Anfahrkupplung. Die Drehzahl 46 der Primärantriebsmaschine 23 wird dabei weiter erhöht, bis sie die von der Steuer- und Regeleinheit 12 vorgegebene Solldrehzahl zur Schaltung der Hauptgetriebeeinheit 18 erreicht. Durch das Schließen der Anfahrkupplung 24 erhöht sich dabei die Drehzahl 45 der Getriebeeingangswelle 16, bis sie gleich ist wie die Drehzahl 46 der Primärantriebsmaschine 23. Sobald die Drehzahl 46 der Primärantriebsmaschine 23 die Solldrehzahl zur Schaltung der Hauptgetriebeeinheit 18 erreicht, wird in der vierten Phase 43 die Hauptgetriebeeinheit 18 in den niedrigeren Hauptgetriebegang geschaltet, wodurch der Schaltvorgang abgeschlossen ist (vgl. Figur 5).

In einem alternativen Betriebsmodus verzichtet die Steuer- und Regeleinheit 12 in den Rückschaltvorgängen in der dritten Phase 42 darauf, die Anfahrkupplung 24 zu schließen. Stattdessen wird in der dritten Phase 42 die Drehzahl 45 der Getriebeeingangswelle 16 mittels des Getriebeeingangswellenstellmittels 17 und/oder mittels des Vorgelegewellenstellmittels 15 auf die Solldrehzahl zur Schaltung der Hauptgetriebeeinheit 18 eingestellt. Sobald die Drehzahl 45 der Getriebeeingangswellendrehzahl 16 die Solldrehzahl zur Schaltung der Hauptgetriebeeinheit 18 erreicht, wird in der vierten Phase 43 die Hauptgetriebeeinheit 18 in den niedrigeren Hauptgetriebegang geschaltet. Anschließend wird die Anfahrkupplung 24 geschlossen, wodurch der entsprechende Rückschaltvorgang abgeschlossen ist.

Ein Schaltvorgang, der als ein gleichsinniger Hochschaltvorgang ausgebildet ist, wird vorteilhaft mittels des Getriebeeingangswellenstellmittels 15 durchgeführt. In dem Hochschaltvorgang wird die Hauptgetriebeeinheit 18 von einem niedrigen Hauptgetriebegang in einen höheren Hauptgetriebegang geschaltet. Außerdem wird die Vorschaltgruppengetriebeeinheit 10 von einem langsamen Splitgang in einen schnellen Splitgang geschaltet. Zur Einleitung des Schaltvorgangs schaltet die Steuer- und Regeleinheit 12 zunächst die Hauptgetriebeeinheit 18 in die Neutralstellung. Außerdem öffnet die Steuer- und Regeleinheit 12 die Anfahrkupplung 24.

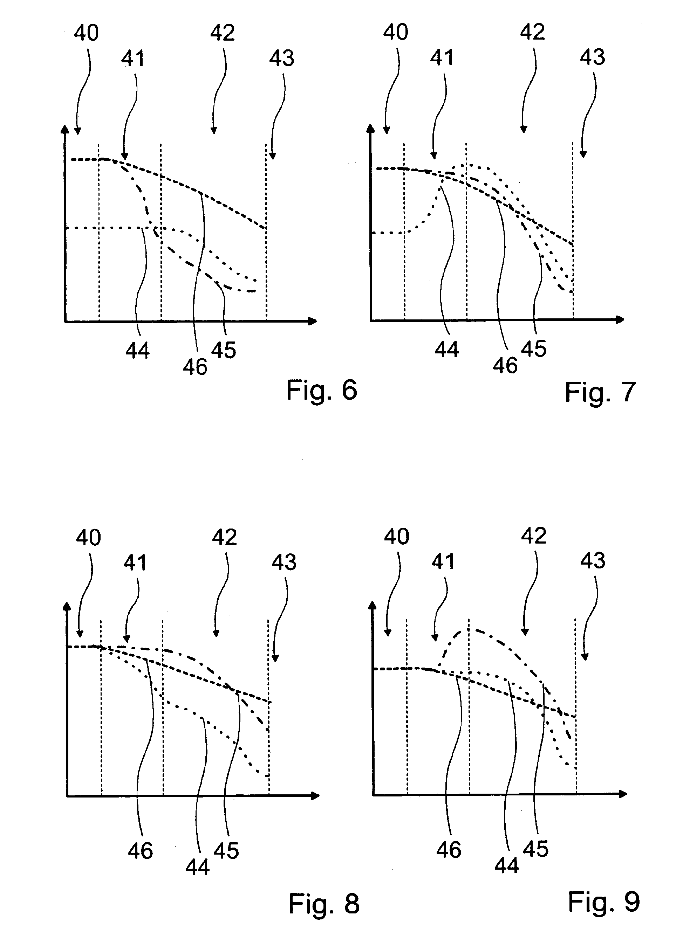

In der ersten Phase 40 des Schaltvorgangs schaltet die Steuer- und Regeleinheit 12 die Vorschaltgruppengetriebeeinheit 10 von dem langsamen Splitgang in die Neutralstellung. In der zweiten Phase 41 verringert die Steuer- und Regeleinheit 12 mittels des Getriebeeingangswellenstellmittels 17 die Drehzahl 45 der Getriebeeingangswelle 16 auf die Solldrehzahl zur Schaltung der Vorschaltgruppengetriebeeinheit 10. Die für die Drehzahl 45 vorgegebene Solldrehzahl ist dabei kleiner als die Drehzahl 44, die die Vorgelegewelle 14 in der zweiten Phase 41 aufweist. Sobald die Getriebeeingangswelle 16 die Solldrehzahl zur Schaltung der Vorschaltgruppengetriebeeinheit 10 erreicht hat, schaltet die Steuer- und Regeleinheit 12 die Vorschaltgruppengetriebeeinheit 10 in den schnellen Splitgang. Zeitgleich mit der Verringerung der Drehzahl 45 der Getriebeeingangswelle 16 gibt die Steuer- und Regeleinheit 12 eine Verringerung der Drehzahl 46 der Primärantriebsmaschine 23 vor. In der dritten Phase 42 verringert die Steuer- und Regeleinheit 12 mittels des Getriebeeingangsstellmittels 17 die Drehzahl 45 der Getriebeeingangswelle 16 weiter. Zeitgleich mit der weiteren Verringerung der Drehzahl 45 der Getriebeeingangswelle 16 wird die Drehzahl 46 der Primärantriebsmaschine 23 weiter verringert. Sobald die Drehzahl 45 der Getriebeeingangswelle 16 die Solldrehzahl zur Schaltung der Hauptgetriebeeinheit 18 erreicht, wird in der vierten Phase 43 die Hauptgetriebeeinheit 18 in den höheren Hauptgetriebegang geschaltet. Anschließend wird die Anfahrkupplung 24 geschlossen, wodurch der Schaltvorgang abgeschlossen ist (vgl. Figur 6).

Der Schaltvorgang, der als ein gleichsinniger Hochschaltvorgang ausgebildet ist, kann alternativ auch mittels des Vorgelegewellenstellmittels 15 durchgeführt werden. Zur Einleitung des Schaltvorgangs schaltet die Steuer- und Regeleinheit 12 zunächst die Hauptgetriebeeinheit 18 in die Neutralstellung. Außerdem öffnet die Steuer- und Regeleinheit 12 die Anfahrkupplung 24.

In der ersten Phase 40 des Schaltvorgangs schaltet die Steuer- und Regeleinheit 12 die Vorschaltgruppengetriebeeinheit 10 von dem langsamen Splitgang in die Neutralstellung. In der zweiten Phase 41 erhöht die Steuer- und Regeleinheit 12 mittels des Vorgelegewellenstellmittels 15 die Drehzahl 44 der Vorgelegewelle 14 auf die Solldrehzahl zur Schaltung der Vorschaltgruppengetriebeeinheit 10. Sobald die Vorgelegewelle 14 die Solldrehzahl zur Schaltung der Vorschaltgruppengetriebeeinheit 10 erreicht hat, schaltet die Steuer- und Regeleinheit 12 die Vorschaltgruppengetriebeeinheit 10 in den schnellen Splitgang. Zeitgleich mit der Erhöhung der Drehzahl 44 der Vorgelegewelle 14 gibt die Steuer- und Regeleinheit 12 eine Verringerung der Drehzahl 46 der Primärantriebsmaschine 23 vor. In der dritten Phase 42 verringert die Steuer- und Regeleinheit 12 mittels des Vorgelegewellenstellmittels 15 die Drehzahl 44 der Vorgelegewelle 14. Zeitgleich mit der Verringerung der Drehzahl 44 der Vorgelegewelle 14 wird die Drehzahl 46 der Primärantriebsmaschine 23 weiter verringert. Sobald die Drehzahl 44 der Vorgelegewelle 14 die Solldrehzahl zur Schaltung der Hauptgetriebeeinheit 18 erreicht, wird in der vierten Phase 43 die Hauptgetriebeeinheit 18 in den höheren Hauptgetriebegang geschaltet. Anschließend wird die Anfahrkupplung 24 geschlossen, wodurch der Schaltvorgang abgeschlossen ist (vgl. Figur 7).

Ein Schaltvorgang, der als ein gegensinniger Hochschaltvorgang ausgebildet ist, wird vorteilhaft mittels des Vorgelegewellenstellmittels 15 durchgeführt. In dem Hochschaltvorgang wird die Hauptgetriebeeinheit 18 von einem niedrigen Hauptgetriebegang in einen höheren Hauptgetriebegang geschaltet. Außerdem wird die Vorschaltgruppengetriebeeinheit 10 von einem schnellen Splitgang in einen langsamen Splitgang geschaltet. Zur Einleitung des Schaltvorgangs schaltet die Steuer- und Regeleinheit 12 zunächst die Hauptgetriebeeinheit 18 in die Neutralstellung. Außerdem öffnet die Steuer- und Regeleinheit 12 die Anfahrkupplung 24.

In der ersten Phase 40 des Schaltvorgangs schaltet die Steuer- und Regeleinheit 12 die Vorschaltgruppengetriebeeinheit 10 von dem schnellen Splitgang in die Neutralstellung. In der zweiten Phase 41 verringert die Steuer- und Regeleinheit 12 mittels des Vorgelegewellenstellmittels 15 die Drehzahl 44 der Vorgelegewelle 14 auf die Solldrehzahl zur Schaltung der Vorschaltgruppengetriebeeinheit 10. Sobald die Vorgelegewelle 14 die Solldrehzahl zur Schaltung der Vorschaltgruppengetriebeeinheit 10 erreicht hat, schaltet die Steuer- und Regeleinheit 12 die Vorschaltgruppengetriebeeinheit 10 in den langsamen Splitgang. Zeitgleich mit der Verringerung der Drehzahl 44 der Vorgelegewelle 14 gibt die Steuer- und Regeleinheit 12 auch eine Verringerung der Drehzahl 46 der Primärantriebsmaschine 23 vor. In der dritten Phase 42 verringert die Steuer- und Regeleinheit 12 mittels des Vorgelegewellenstellmittels 15 die Drehzahl 44 der Vorgelegewelle 14 weiter. Zeitgleich mit der weiteren Verringerung der Drehzahl 44 der Vorgelegewelle 14 wird auch die Drehzahl 46 der Primärantriebsmaschine 23 weiter verringert. Sobald die Drehzahl 44 der Vorgelegewelle 14 die Solldrehzahl zur Schaltung der Hauptgetriebeeinheit 18 erreicht, wird in der vierten Phase 43 die Hauptgetriebeeinheit 18 in den höheren Hauptgetriebegang geschaltet. Anschließend wird die Anfahrkupplung 24 geschlossen, wodurch der Schaltvorgang abgeschlossen ist (vgl. Figur 8).

Der Schaltvorgang, der als ein gegensinniger Hochschaltvorgang ausgebildet ist, kann alternativ auch mittels des Getriebeeingangswellenstellmittels 17 durchgeführt werden. Zur Einleitung des Schaltvorgangs schaltet die Steuer- und Regeleinheit 12 zunächst die Hauptgetriebeeinheit 18 in die Neutralstellung. Außerdem öffnet die Steuer- und Regeleinheit 12 die Anfahrkupplung 24.

In der ersten Phase 40 des Schaltvorgangs schaltet die Steuer- und Regeleinheit 12 die Vorschaltgruppengetriebeeinheit 10 von dem schnellen Splitgang in die Neutralstellung. In der zweiten Phase 41 erhöht die Steuer- und Regeleinheit 12 mittels des Getriebeeingangswellenstellmittels 17 die Drehzahl 45 der Getriebeeingangswelle 16 auf die Solldrehzahl zur Schaltung der Vorschaltgruppengetriebeeinheit 10. Sobald die Getriebeeingangswelle die Solldrehzahl zur Schaltung der Vorschaltgruppengetriebeeinheit 10 erreicht hat, schaltet die Steuer- und Regeleinheit 12 die Vorschaltgruppengetriebeeinheit 10 in den langsamen Splitgang. Zeitgleich mit der Erhöhung der Drehzahl 45 der Getriebeeingangswelle 16 gibt die Steuer- und Regeleinheit 12 eine Verringerung der Drehzahl 46 der Primärantriebsmaschine 23 vor. In der dritten Phase 42 verringert die Steuer- und Regeleinheit 12 mittels des Getriebeeingangsstellmittels 17 die Drehzahl 45 der Getriebeeingangswelle 16. Zeitgleich mit der Verringerung der Drehzahl 45 der Getriebeeingangswelle 16 wird die Drehzahl 46 der Primärantriebsmaschine 23 weiter verringert. Sobald die Drehzahl 45 der Getriebeeingangswelle 16 die Solldrehzahl zur Schaltung der Hauptgetriebeeinheit 18 erreicht, wird in der vierten Phase 43 die Hauptgetriebeeinheit 18 in den höheren Hauptgetriebegang geschaltet. Anschließend wird die Anfahrkupplung 24 geschlossen, wodurch der Schaltvorgang abgeschlossen ist (vgl. Figur 9).

Ein Schaltvorgang, der lediglich mittels der Vorschaltgruppengetriebeeinheit 10 durchgeführt wird, wird mittels des Getriebeeingangswellenstellmittels 17 durchgeführt. In dem Schaltvorgang verändert die Vorschaltgruppengetriebeeinheit 10 den Splitgang, während der Hauptgetriebegang der Hauptgetriebeeinheit 18 beibehalten wird. Zur Einleitung des Schaltvorgangs öffnet die Steuer- und Regeleinheit 12 die Anfahrkupplung 24. Der Hauptgetriebegang bleibt während des Schaltvorgangs ständig geschaltet.

In einer ersten Phase des Schaltvorgangs schaltet die Steuer- und Regeleinheit 12 die Vorschaltgruppengetriebeeinheit 10 von dem geschalteten Splitgang in die Neutralstellung. In einer zweiten Phase verändert die Steuer- und Regeleinheit 12 mittels des Getriebeeingangswellenstellmittels 17 die Drehzahl 45 der Getriebeeingangswelle 16 auf die Solldrehzahl zur Schaltung der Vorschaltgruppengetriebeeinheit 10. Sobald die Vorgelegewelle 14 die Solldrehzahl zur Schaltung der Vorschaltgruppengetriebeeinheit 10 erreicht hat, schaltet die Steuer- und Regeleinheit 12 die Vorschaltgruppengetriebeeinheit 10 in den zu schaltenden Splitgang. In einer dritten Phase wird die Anfahrkupplung 24 geschlossen, wodurch der Schaltvorgang abgeschlossen ist.

Um in der Hauptgetriebeeinheit 10 eine Zahn-auf-Zahn-Stellung zu beheben, wird die Anfahrkupplung 24 geöffnet. Anschließend wird die Zahn-auf-Zahn-Stellung mittels des Vorgelegewellenstellmittels 15 behoben. Bei geschaltetem Splitgang kann die Zahn-auf-Zahn-Stellung zusätzlich oder alternativ mittels des Getriebeeingangswellenstellmittels 17 behoben werden.

Bei Schaltvorgängen, die lediglich mittels der Hauptschaltgruppengetriebeeinheit 18 durchgeführt werden, werden die Schaltmittel 19, 20, 21 der Hauptgetriebeeinheit 18 ebenfalls mittels der Stelleinheit 11 synchronisiert. Bei geöffneter Anfahrkupplung 24 wird die Hauptgetriebeeinheit 18 mittels des Vorgelegewellenstellmittels 15 synchronisiert. Bei geschaltetem Splitgang kann die Hauptgetriebeeinheit 18 zusätzlich oder alternativ mittels des Getriebeeingangswellenstellmittels 17 synchronisiert werden.

In einem Betriebsmodus, in dem der Antriebsstrang kraftschlüssig geschlossen ist, ist die Stelleinheit 11 als ein Hybridantriebsmodul ausgebildet, mittels dem ein zusätzliches Antriebsmoment bereitgestellt werden kann. In diesem Betriebsmodus, in dem die Vorschaltgruppengetriebeeinheit 10, die Hauptgetriebeeinheit 18 und die Nachschaltgruppengetriebeeinheit 22 geschaltet sind, wirkt das Stellmoment, das mittels der Stelleinheit 11 bereitgestellt werden kann, zusätzlich zu einem Antriebsmoment der Primärantriebseinheit 23. Mittels der in diesem Betriebsmodus als Hybridantriebsmodul ausgebildeten Stelleinheit 11 wird ein Boost-Modus und/oder ein Rekuperationsmodus bereitgestellt. Außerdem kann mittels der Stelleinheit 11, beispielsweise durch Schaltung der Hauptgetriebeeinheit 18 in die Neutralstellung und Schließen der Anfahrkupplung 24, ein Hybridantriebsmodul bereitgestellt werden, das als ein Starter-Generator-Modul ausgebildet ist.

## Patentansprüche

1. Gruppengetriebevorrichtung mit einer Hauptgetriebeeinheit (18) und einer Vorschaltgruppengetriebeeinheit (10), mit zumindest einer aktiven Stelleinheit (11), die dazu vorgesehen ist, ein von einem Antriebsmoment einer Primärantriebseinheit (23) abweichendes Stellmoment in die Vorschaltgruppengetriebeeinheit (10) einzuleiten, mit einer Steuer- und/oder Regeleinheit (12), die dazu vorgesehen ist, das in die Vorschaltgruppengetriebeeinheit (10) eingeleitete Stellmoment auf zumindest einen mittels der Vorschaltgruppengetriebeeinheit (10) auszuführenden Schaltvorgang anzupassen, und mit zumindest einer Getriebeeingangswelle (16), wobei die Stelleinheit (11) in dem zumindest einen Schaltvorgang zur Synchronisation der Vorschaltgruppengetriebeeinheit (10) vorgesehen ist,
und wobei die Vorschaltgruppengetriebeeinheit (10) zumindest ein synchronringfrei ausgebildetes Schaltmittel (13) aufweist, das zumindest teilweise mit der Stelleinheit (11) verbunden ist,
**dadurch gekennzeichnet, dass**
die Stelleinheit (11) zumindest ein Getriebeeingangswellenstellmittel (17) aufweist, das dazu vorgesehen ist, ein auf die Getriebeeingangswelle (16) wirkendes Stellmoment bereitzustellen.

2. Gruppengetriebevorrichtung nach Anspruch 1,
**dadurch gekennzeichnet, dass**
die Stelleinheit (11) zur Aufnahme eines Stellmoments und zur Abgabe eines Stellmoments vorgesehen ist.

3. Gruppengetriebevorrichtung nach einem der vorhergehenden Ansprüche,
**dadurch gekennzeichnet, dass**
die Steuer- und/oder Regeleinheit (12) dazu vorgesehen ist, das in die Vorschaltgruppengetriebeeinheit (10) eingeleitete Stellmoment während des Schaltvorgangs anzupassen und/oder zu verändern.

4. Gruppengetriebevorrichtung nach einem der vorhergehenden Ansprüche,
**dadurch gekennzeichnet, dass**
die Steuer- und/oder Regeleinheit (12) dazu vorgesehen ist, eine Zahn-auf-Zahn-Stellung der Vorschaltgruppengetriebeeinheit (10) aufzuheben.

5. Gruppengetriebevorrichtung nach einem der vorhergehenden Ansprüche,
**gekennzeichnet durch**
zumindest eine Vorgelegewelle (14), wobei die Stelleinheit (11) zumindest ein Vorgelegewellenstellmittel (15) aufweist, das dazu vorgesehen ist, ein auf die Vorgelegewelle (14) wirkendes Stellmoment bereitzustellen.

6. Gruppengetriebevorrichtung nach Anspruch 5,
**dadurch gekennzeichnet, dass**
die Steuer- und/oder Regeleinheit (12) bei einem in der Hauptgetriebeeinheit (18) und der Vorschaltgruppengetriebeeinheit (10) gegensinnig auszuführenden Schaltvorgang dazu vorgesehen ist, das Stellmoment für die Vorgelegewelle (14) einzustellen.

7. Gruppengetriebeeinheit nach Anspruch 1,
**dadurch gekennzeichnet, dass**
die Steuer- und/oder Regeleinheit (12) bei einem in der Hauptgetriebeeinheit (18) und der Vorschaltgruppengetriebeeinheit (10) gleichsinnig auszuführenden Schaltvorgang dazu vorgesehen ist, das Stellmoment für die Getriebeeingangswelle (16) einzustellen.

8. Gruppengetriebevorrichtung nach einem der vorhergehenden Ansprüche,
**gekennzeichnet dadurch, dass**
die Hauptgetriebeeinheit (18) zumindest ein synchronringfreies Schaltmittel (19, 20, 21) aufweist.

9. Gruppengetriebevorrichtung nach Anspruch 8,
**dadurch gekennzeichnet, dass**
die Steuer- und/oder Regeleinheit (12) dazu vorgesehen ist, das Stellmoment auf zumindest einen mittels der Hauptgetriebeeinheit (18) auszuführenden Schaltvorgang anzupassen.

10. Gruppengetriebevorrichtung nach Anspruch 8 oder 9,
**dadurch gekennzeichnet, dass**
die Steuer- und/oder Regeleinheit (12) zur Synchronisation der Hauptgetriebeeinheit und/oder zur Behebung einer Zahn-auf-Zahnstellung der Hauptgetriebeeinheit (12) vorgesehen ist.

11. Gruppengetriebevorrichtung nach einem der vorhergehenden Ansprüche,
**dadurch gekennzeichnet, dass**
die Stelleinheit (11) in zumindest einem Betriebsmodus als ein Hybridantriebsmodul ausgebildet ist, das dazu vorgesehen ist, ein Antriebsmoment bereitzustellen.

12. Verfahren für eine Gruppengetriebevorrichtung mit einer Hauptgetriebeeinheit (18) und einer Vorschaltgruppengetriebeeinheit (10), wobei mittels einer aktiven Stelleinheit (11) ein von einem Antriebsmoment einer Primärantriebseinheit abweichendes Stellmoment in die Vorschaltgruppengetriebeeinheit (10) eingeleitet wird, wobei mitttels einer Steuer- und/oder Regeleinheit (12) das in die Vorschaltgruppengetriebeeinheit (10) eingeleitete Stellmoment auf zumindest einen mittels der Vorschaltgruppengetriebeeinheit (10) auszuführenden Schaltvorgang angepasst wird,
wobei mittels der Stelleinheit (11) in dem zumindest einen Schaltvorgang eine Synchronisation der Vorschaltgruppengetriebeeinheit (10) erfolgt,
**dadurch gekennzeichnet, dass**
die Stelleinheit (11) mittels eines Getriebeeingangswellenstellmittels (17) ein auf die Getriebeeingangswelle (16) wirkendes Stellmoment bereitstellt,
und dass mittels der Stelleinheit (11) bei einem in der Hauptgruppeneinheit (18) und der Vorschaltgruppeneinheit (10) gleichsinnig auszuführenden Schaltvorgang das Stellmoment für die Getriebeeingangswelle (16) eingestellt wird.

## Claims

1. Auxiliary-range transmission device, comprising a main transmission unit (18) and a splitter group transmission unit (10), at least one active actuator unit (11) provided for introducing an actuating torque which differs from a drive torque of a primary drive unit (23) into the splitter group transmission unit (10), an open- and/or closed-loop control unit (12) provided for adapting the actuating torque introduced into the splitter group transmission unit (10) to at least one shifting operation to be carried out by the splitter group transmission unit (10), and at least one input shaft (16), wherein the actuator unit (11) is provided for synchronising the splitter group transmission unit (10) in the at least one shifting operation, and wherein the splitter group transmission unit (10) comprises at least one shifting means (13) which is designed without a synchroniser ring and which is at least partially connected to the actuator unit (11),
**characterised in that**
the actuator unit (11) comprises at least one input shaft actuating means (17) which is provided for delivering an actuating torque acting on the input shaft (16).

2. Auxiliary-range transmission device according to claim 1,
**characterised in that**
the actuator unit (11) is provided for receiving an actuating torque and for delivering an actuating torque.

3. Auxiliary-range transmission device according to any of the preceding claims,
**characterised in that**
the open- and/or closed-loop control unit (12) is provided for adapting or altering the actuating torque introduced into the splitter group transmission unit (10) during the shifting operation.

4. Auxiliary-range transmission device according to any of the preceding claims,
**characterised in that**
the open- and/or closed-loop control unit (12) is provided for cancelling a tooth-on-tooth position of the splitter group transmission unit (10).

5. Auxiliary-range transmission device according to any of the preceding claims,
**characterised by**
at least one layshaft (14), wherein the actuator unit (11) comprises at least one layshaft adjusting means (15) which is provided for delivering an actuating torque acting on the layshaft (14).

6. Auxiliary-range transmission device according to claim 5,
**characterised in that**
the open- and/or closed-loop control unit (12) is provided for adjusting the actuating torque for the layshaft (14) during a shifting operation to be performed by the main transmission unit (18) and the splitter group transmission unit (10) in opposite directions.

7. Auxiliary-range transmission device according to claim 1,
**characterised in that**
the open- and/or closed-loop control unit (12) is provided for adjusting the actuating torque for the input shaft (14) during a shifting operation to be performed by the main transmission unit (18) and the splitter group transmission unit (10) in the same direction.

8. Auxiliary-range transmission device according to any of the preceding claims,
**characterised in that**
the main transmission unit (18) comprises at least one shifting means (19, 20, 21) which is designed without a synchroniser ring.

9. Auxiliary-range transmission device according to claim 8,
**characterised in that**
the open- and/or closed-loop control unit (12) is provided for adapting the actuating torque to at least one shifting operation to be carried out by means of the main transmission unit (18).

10. Auxiliary-range transmission device according to claim 8 or 9,
**characterised in that**
the open- and/or closed-loop control unit (12) is provided for synchronising the main transmission unit and/or for cancelling a tooth-on-tooth position of the main transmission unit (18).

11. Auxiliary-range transmission device according to any of the preceding claims,
**characterised in that**
the actuator unit (11) is in at least one operating mode designed as a hybrid drive module which is provided for delivering a driving torque.

12. Method for an auxiliary-range transmission device comprising a main transmission unit (18) and a splitter group transmission unit (10), wherein an actuating torque which differs from a drive torque of a primary drive unit is introduced into the splitter group transmission unit (10)by means of an active actuator unit (11), wherein the actuating torque introduced into the splitter group transmission unit (10) is adapted to at least one shifting operation to be carried out by the splitter group transmission unit (10) by means of an open- and/or closed-loop control unit (12),
wherein the splitter group transmission unit (10) is synchronised by means of the actuator unit (11) in the at least one shifting operation, **characterised in that**
the actuator unit (11) delivers an actuating torque acting on the input shaft (16) by means of an input shaft actuating means (17),
and **in that** the actuating torque for the input shaft (16) is adjusted by means of the actuator unit (11) during a shifting operation to be carried out by the main transmission unit (18) and the splitter group transmission unit (10) in the same direction.

## Revendications

1. Dispositif de transmission à plusieurs groupes doté d'une unité (18) de transmission principale (18) et d'une unité de transmission à plusieurs groupes montée en amont (10), d'au moins une unité de réglage active (11) qui sert à introduire dans l'unité de transmission à plusieurs groupes montée en amont (10) un couple de réglage différent d'un couple d'entraînement d'une unité d'entraînement primaire (23), d'une unité de commande et/ou de régulation (12) qui sert à adapter le couple de réglage introduit dans l'unité de transmission à plusieurs groupes montée en amont (10) à au moins une opération de commutation devant être effectuée au moyen de l'unité de transmission à plusieurs groupes montée en amont (10), et d'au moins un arbre d'entrée de transmission (16), l'unité de réglage (11) servant dans l'au moins une opération de commutation à synchroniser l'unité de transmission à plusieurs groupes montée en amont (10), et l'unité de transmission à plusieurs groupes montée en amont (10) présentant au moins un moyen de commutation (13) conçu sans bague de synchronisation qui est relié au moins en partie à l'unité de réglage (11), **caractérisé en ce que** l'unité de réglage (11) présente au moins un moyen de réglage d'arbre d'entrée de transmission (17) qui sert à fournir un couple de réglage agissant sur l'arbre d'entrée de transmission (16).

2. Dispositif de transmission à plusieurs groupes selon la revendication 1, **caractérisé en ce que** l'unité de réglage (11) est destinée à la réception d'un couple de réglage et à la distribution d'un couple de réglage.

3. Dispositif de transmission à plusieurs groupes selon l'une quelconque des revendications précédentes, **caractérisé en ce que** l'unité de réglage et/ou de commande (12) sert à adapter et/ou à modifier le couple de réglage introduit dans l'unité de transmission à plusieurs groupes montée en amont (10) pendant l'opération de commutation.

4. Dispositif de transmission à plusieurs groupes selon l'une quelconque des revendications précédentes, **caractérisé en ce que** l'unité de réglage et/ou de commande (12) sert à supprimer une position dent sur dent de l'unité de transmission à plusieurs groupes montée en amont (10).

5. Dispositif de transmission à plusieurs groupes selon l'une quelconque des revendications précédentes, **caractérisé en ce qu'**au moins un arbre intermédiaire (14), l'unité de réglage (11) présentant au moins un moyen de réglage d'arbre intermédiaire (15), sert à fournir un couple de réglage agissant sur l'arbre intermédiaire (14).

6. Dispositif de transmission à plusieurs groupes selon la revendication 5, **caractérisé en ce que** l'unité de réglage et/ou de commande (12) sert à régler le couple de réglage pour l'arbre intermédiaire (14) lors d'une opération de commutation devant être effectuée dans l'unité de transmission principale (18) en sens inverse de l'unité de transmission à plusieurs groupes montée en amont.

7. Dispositif de transmission à plusieurs groupes selon la revendication 1, **caractérisé en ce que** l'unité de réglage et/ou de commande (12) sert à régler le couple de réglage pour l'arbre d'entrée de transmission (16) lors d'une opération de commutation devant être effectuée dans l'unité de transmission principale (18) dans le même sens que l'unité de transmission à plusieurs groupes montée en amont (10).

8. Dispositif de transmission à plusieurs groupes selon l'une quelconque des revendications précédentes, **caractérisé en ce que** l'unité de transmission principale (18) présente au moins un moyen de commutation (19, 20, 21) sans bague de synchronisation.

9. Dispositif de transmission à plusieurs groupes selon la revendication 8, **caractérisé en ce que** l'unité de réglage et/ou de commande (12) sert à adapter le couple de réglage à au moins une opération de commutation devant être effectuée au moyen de l'unité de transmission principale (18).

10. Dispositif de transmission à plusieurs groupes selon la revendication 8 ou 9, **caractérisé en ce que** l'unité de réglage et/ou de commande (12) sert à la synchronisation de l'unité de transmission principale et/ou à la suppression d'une position dent sur dent de l'unité de transmission principale (12).

11. Dispositif de transmission à plusieurs groupes selon l'une quelconque des revendications précédentes, **caractérisé en ce que** l'unité de réglage (11) est conçue dans au moins un mode de fonctionnement comme un module d'entraînement hybride qui sert à fournir un couple d'entraînement.

12. Procédé pour un dispositif de transmission à plusieurs groupes doté d'une unité de transmission principale (18) et d'une unité de transmission à plusieurs groupes montée en amont (10), au moyen d'une unité de réglage active (11) un couple de réglage différent d'un couple d'entraînement d'une unité d'entraînement primaire (23) étant introduit dans l'unité de transmission à plusieurs groupes montée en amont (10), au moyen d'une unité de commande et/ou de régulation (12) le couple de réglage introduit dans l'unité de transmission à plusieurs groupes montée en amont (10) étant adapté à au moins une opération de commutation devant être effectuée au moyen de l'unité de transmission à plusieurs groupes montée en amont (10), au moyen de l'unité de réglage (11) dans l'au moins une opération de commutation s'effectuant une synchronisation de l'unité de transmission à plusieurs groupes montée en amont (10), **caractérisé en ce que** l'unité de réglage (11) fournit au moyen d'un moyen de réglage d'arbre d'entrée de transmission (17) un couple de réglage agissant sur l'arbre d'entrée de transmission (16), et **en ce qu'**au moyen de l'unité de réglage (11) une opération de commutation devant être effectuée dans le même sens que l'unité à plusieurs groupes montée en amont (10) et dans l'unité à plusieurs groupes principale (18) le couple de réglage est réglé pour l'arbre d'entrée de transmission (16).
